# EUROPEAN PATENT SPECIFICATION

(11) **EP 2 767 381 B1**
(45) Date of publication and mention of the grant of the patent: **01.06.2022**
(21) Application number: 14152089.0
(22) Date of filing: 22.01.2014
(51) Int. Cl.: B29C 45/17, B29C 45/64, B29C 45/66

(54) **Injection molding machine**
Spritzgießmaschine
Machine de moulage à injection

(30) Priority: 14.02.2013 JP 2013027163
(43) Date of publication of application: 20.08.2014
(73) Proprietor: SUMITOMO HEAVY INDUSTRIES, LTD., Tokyo 141-6025 (JP)
(72) Inventor: Tanaka, Yoshitada, Chiba-shi Chiba 263-0001 (JP)
(74) Representative: Hoffmann Eitle

(56) References cited:
- EP-A2- 1 275 486
- JP-A- H0 924 527
- JP-A- 2009 248 464
- US-A- 5 776 402
- US-A1- 2007 036 879
- US-A1- 2007 222 124
- US-A1- 2010 055 228

## Description

### FIELD

The present invention is related to an injection molding machine.

### BACKGROUND

In the injection molding machine, a cavity space of a mold unit is filled with a molten resin and the molten resin is set to produce a molding product. The mold unit includes a stationary mold and a movable mold. The cavity space is formed between the stationary mold and the movable mold at the time of the mold clamping. The molding product formed in the cavity space is ejected from the movable mold after the mold unit is opened. An ejector unit is used for ejecting the molding product (see International Publication Pamphlet No. WO2005/068155, for example).

A movable platen is formed by a movable mold mounting portion to which the mold is attached, and a plurality of arm portions that transmit the mold clamping force, which is generated by a mold clamping force generating mechanism, to the mold mounting portion, etc. The arm portions are provided on an opposite surface with respect to a mold mounting surface of the movable mold mounting portion, and the ejector unit is provided between the arm portions.

The ejector unit includes ejector rods that are inserted through holes of the movable mold mounting portion such that the ejector rods can reciprocate. The ejector rods are rested at an eject starting point during a mold closing process and a mold opening process, and moved to an eject end point from the eject starting point after the mold opening process.

According to prior art, a region in which the holes through which the ejector rods of the mold mounting portion are provided is limited to a central portion of the mold mounting portion due to the existence of the arm portions.

Another document is US 2007/0222124 A1 referring to a mold holding cross member comprising a support base. The support base is connected to the rest of the cross section member by a narrow portion which extends in the central area of the base and between the protections of the hinging areas of the double toggle of the press on the press pad, and substantially not outside those protections. In this way, the pressures are more uniformly distributed on the mold.

Another document is US 2010/0055228 A1 referring to an ejector and injection molding machine and a moving plate including the same.

JP 2009/248464 A1 refers to a clamping device of an injection molding machine.

JP H09 24527A refers to an ejector unit and injection molding machine.

According to EP 1275 486 A2, a molding machine includes a movable mold support apparatus, which again includes a mold mounting plate, a first load receiving port and a second load receiving port, and a load transmit member having a first and connected to both the first load and the second load receiving ports and a second end connected to a rear surface of the mold mounting plate, wherein a distance between the center of the mold mounting plate and the second end of the load transmit number is shorter that a distance between the center of the mold mounting plate and the first load receiving port and the second load receiving port.

Further documents are US 5,776,402 A and US 2007/036879 A1.

The present invention is made in consideration of the problem described above, and it is an object in one aspect of the present invention to provide an injection molding machine in which a region for providing holes through which ejector rods of a mold mounting portion are inserted can be increased.

### SUMMARY

In order to solve the problem, according to the invention, an injection molding machine is provided, which includes the features of claim 1.

### BRIEF DESCRIPTION OF DRAWINGS

Fig. 1 is a diagram for illustrating a status of an injection molding machine 1 according to an embodiment of the present invention at the time of completing a mold closing process.
Fig. 2 is a diagram for illustrating a configuration of a movable platen according to an embodiment of the present invention.

### DESCRIPTION OF EMBODIMENTS

In the following, the best mode for carrying out the present invention will be described in detail by referring to the accompanying drawings. In respective drawings, the same or corresponding elements are given the same or corresponding numbers. Further, the following explanation is based on an assumption that "a front direction" corresponds to a direction in which the movable platen moves at the time of the mold closing process and "a rear direction" corresponds to a direction in which the movable platen moves at the time of the mold opening process. Further, the following explanation is based on an assumption that "an inner side" corresponds to a near side that is closer to a center line of a mold mounting portion of the movable platen and "an outer side" corresponds to a farther side that is farther from the center line of the mold mounting portion of the movable platen.

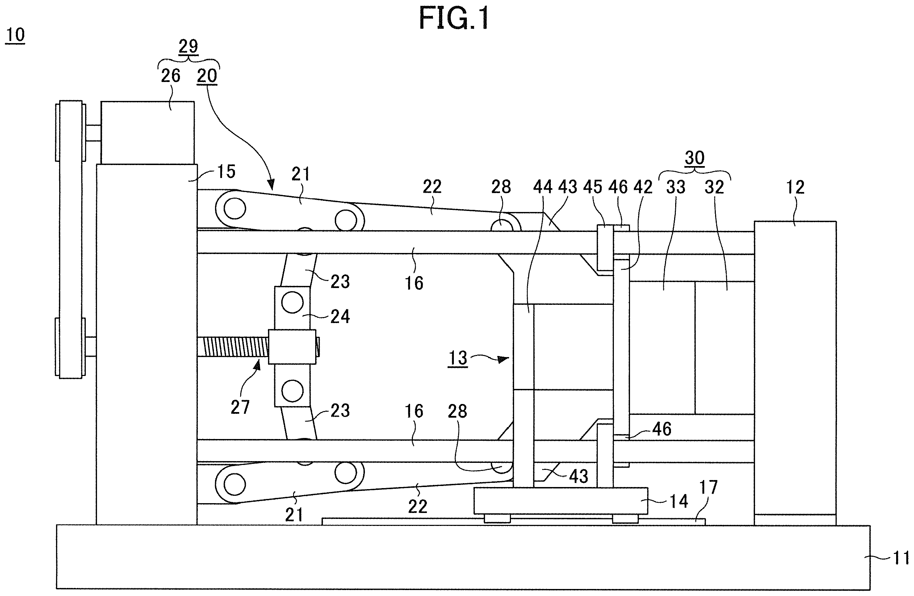

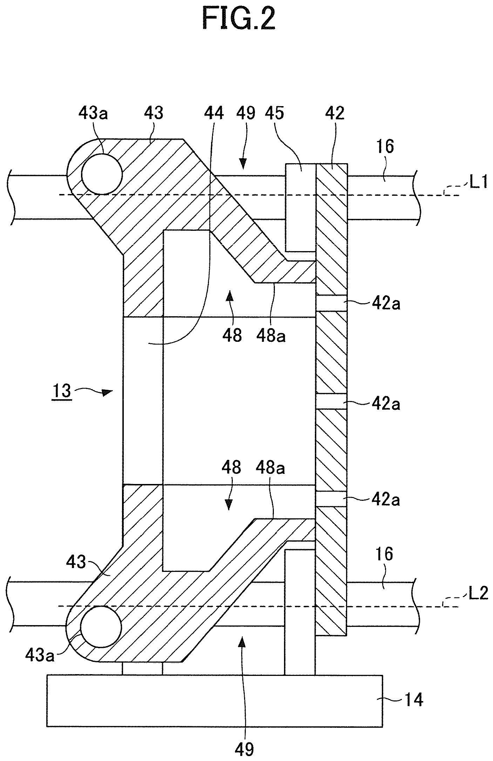

Fig. 1 is a diagram for illustrating a status of an injection molding machine 1 according to a first embodiment of the present invention at the time of completing a mold closing process. Fig. 2 is a diagram for illustrating a configuration of a movable platen according to the first embodiment of the present invention.

As illustrated in Fig. 1, the injection molding machine 10 includes a frame 11, a stationary platen 12, a movable platen 13, blocks 14, a rear platen 15 as a support, tie bars 16, guides 17, a toggle mechanism 20, a mold clamping motor 26, etc., for example.

The stationary platen 12 may be fixed to the frame 11. The rear platen 15 is disposed such that a space is formed between the rear platen 15 and the stationary platen 12. The rear platen 15 and the stationary platen 12 are coupled to each other by a plurality of (four, for example) tie bars 16. The rear platen 15 is disposed on the frame 11 such that the rear platen 15 can move in the front and rear directions so as to permit an extension of the tie bars 16 at the time of the mold clamping process.

The movable platen 13 is disposed between the rear platen 15 and the stationary platen 12. The movable platen 13 is secured to a plurality of (two, for example) blocks 14 by means of bolts or the like. A plurality of (two, for example) guides 17 are provided on the frame 11 for guiding the blocks 14 in the front and rear directions. The blocks 14 may hold rolling elements (balls, rollers, etc) such that the rolling elements are arranged between the blocks 14 and the guides 17. The movable platen 13 moves together with the blocks 14 in the front and rear directions (left and right directions in Fig. 1) such that the movable platen 13 comes into contact with or departs from the stationary platen 12.

It is noted that, in the illustrated embodiment, the blocks 14 are guided by the guides 17 in the front and rear directions; however, a single block to which the movable platen 13 is secured may be guided by a plurality of guides in the front and rear directions.

A movable mold 33 is attached to a surface of the movable platen 13 that is opposed to the stationary platen 12. On the other hand, a stationary mold 32 is attached to a surface of the stationary platen 12 that is opposed to the movable platen 13. A mold unit 30 is formed by the stationary mold 32 and the movable mold 33. When the movable mold 33 is moved in the front direction, the movable mold 33 comes into contact with the stationary mold 32, completing the mold closing process. Further, when the movable mold 33 is moved in the rear direction, the movable mold 33 departs from the stationary mold 32, completing the mold opening process.

The toggle mechanism 20 is disposed between the movable platen 13 and the rear platen 15. For example, the toggle mechanism 20 includes a cross head 24 that can move in the front and rear directions and in directions parallel to the mold opening and closing directions; second toggle levers 23 that are pivotably attached to the cross head 24; first toggle levers 21 that are pivotably attached to the rear platen 15; and toggle arms 22 that are pivotably attached to the movable platen 13. The second toggle levers 23 are coupled to the corresponding first toggle levers 21 by means of pins such that the second toggle levers 23 can rotate around the coupling points with respect to the corresponding first toggle levers 21. The first toggle levers 21 are coupled to the corresponding toggle arms 22 by means of pins such that the first toggle levers 21 can rotate around the coupling points with respect to the corresponding toggle arms 22. The toggle mechanism 20 is a so-called "involute five-joint double toggle mechanism" that has a symmetrical configuration in upper and lower directions.

The mold clamping motor 26 drives the toggle mechanism 20. The mold clamping motor 26 may be a servo motor. The mold clamping motor 26 causes the toggle mechanism 20 to operate via a ball screw mechanism 27 for converting a rotational motion into a rectilinear motion.

It is noted that the rotational motion of the mold clamping motor 26 is transmitted to the ball screw mechanism 27 according to the embodiment via a belt and pulleys, as illustrated in Fig. 1; however, the rotational motion of the mold clamping motor 26 may be directly transmitted to the ball screw mechanism 27.

When the mold clamping motor 26 is driven in a status where the mold opening is completed, the toggle mechanism 20 is operated such that the cross head 24 is moved in the front direction. As a result of this, the movable platen 13 is moved in the front direction and the movable mold 33 comes into contact with the stationary mold 32, completing the mold closing process, as illustrated in Fig. 1.

Then, when the mold clamping motor 26 is further driven, the toggle mechanism 20 generates a mold clamping force whose magnitude is obtained by multiplying a propelling force generated by the mold clamping motor 26 by a toggle factor. A cavity space is formed between the stationary mold 32 and the movable mold 33 in the mold clamped status. An injection unit (not illustrated) injects a liquid molding material (molten resin, for example) to fill the cavity space with it. The injected molding material is set to form a molding product.

Then, when the mold clamping motor 26 is driven, the toggle mechanism 20 is operated such that the cross head 24 is moved in the rear direction. As a result of this, the movable platen 13 is moved in the rear direction, completing the mold opening process. After the mold opening process is completed, an ejector unit ejects the molding product from the movable mold 33.

A mold clamping force generating mechanism 29 is formed by the toggle mechanism 20, the mold clamping motor 26, etc.

Next, referring Fig. 1 and Fig. 2 again, a configuration of the movable platen 13 is explained. The movable platen 13 is formed by a mold mounting portion 42, arm portions 43, reinforce portions 44, tie bar inserting portions 45, etc. The mold mounting portion 42, the arm portions 43, the reinforce portions 44 and the tie bar inserting portions 45 may be integrally formed by die casting, for example. At that time, the blocks 14 also may be integrally formed.

The mold mounting portion 42 is provided for the movable mold 33 that is attached to the mold mounting portion 42. The mold mounting portion 42 is plate-shaped. A front end surface of the mold mounting portion 42 defines a mold mounting surface to which the movable mold 33 is attached. A plurality of rod holes 42a are formed in the mold mounting portion 42 such that the ejector rods of the ejector unit are inserted so that the ejector rods can move in the front and rear directions. The ejector rods are rested at an eject starting point during a mold closing process and a mold opening process, and moved in the front direction to an eject end point from the eject starting point after the mold opening process. The ejector rods may be moved in the front direction during the mold opening process so as to shorten a molding cycle.

The tie bar inserting portions 45 include tie bar through-holes for inserting the tie bars 16 threrethrough. The tie bar inserting portions 45 are provided at four corners of the mold mounting portion 42. The tie bar inserting portions 45 form front concave portions 46 (see Fig. 1) that are recessed from the mold mounting surface of the mold mounting portion 42. Bottom surfaces of the front concave portions 46 are formed by front end surfaces of the tie bar inserting portions 45.

It is noted that the movable platen 13 according to the invention includes the tie bar inserting portions 45. The movable platen 13 may include notches at positions where the upper tie bars 16 extend. The configuration , which does not form part of the invention, is arbitrary as long as interference between the tie bars 16 and the movable platen 13 can be prevented.

The arm portions 43 transmit the mold clamping force from the mold clamping force generating mechanism 29 to the mold mounting portion 42. The arm portions 43 are provided at the upper and lower portions of the mold mounting portion 42, respectively, for example, and include pin holes 43 (see Fig. 2) for inserting pins 28 (see Fig. 1) therethrough that couple to the end portions of the toggle mechanism 20 (end portions of the toggle arms 22). The arm portions 43 supports the toggle arms 22 such that the toggle arms 22 can rotate around the center lines of the corresponding pins 28.

The ejector unit for ejecting the molding product from the movable mold 33 is provided between the arm portions 43.

The arm portions 43 include inner side surfaces that include inner side concave portions 48 formed therein, respectively. Specifically, the inner side surface (surface on the lower side) of the upper arm portion 43 and the inner side surface (surface on the upper side) of the lower arm portion 43 include inner side concave portions 48 formed therein, respectively. Front side wall surfaces of the inner side concave portions 48 may be formed by a rear end surface of the mold mounting portion 42. The inner side concave portions 48 are formed in inner side surfaces of the arm portions 43. Correspondingly, a region for providing rod holes 42a of the mold mounting portion 42 can be extended in the upper and lower directions. Therefore, it becomes possible to use the mold unit 30 of the increased size.

It is noted that, in the embodiment, the arm portions 43 each include the inner side surfaces that include the inner side concave portions 48 formed therein; however, at least one arm portion 43 may include the inner side surface that has the inner side concave portion 48 formed therein.

A bottom surface 48a of the inner side concave portion 48 includes an inclined portion that is inclined with respect to the mold clamping direction (left and right directions in the drawings). In the embodiment, the inclined portion is plane; however, a configuration of the inclined portion is arbitrary as long as the inclined portion is inclined with respect to the mold clamping direction, and thus the inclined portion may be formed by a curved surface. The inclined portion may have a depth that decreases as a position moves from the rear side to the front side. The bottom surface 48a of the inner side concave portion 48, which is formed in the upper arm portion 43, includes the inclined portion whose front part is lower than its rear part, and the bottom surface 48a of the inner side concave portion 48, which is formed in the lower arm portion 43, includes the inclined portion whose front part is higher than its rear part. The mold clamping force is distributed such that a part of the mold clamping force is transmitted along the bottom surfaces 48a of the inner side concave portions 48. The mold clamping force is not concentrated on the outer peripheral portion of the mold mounting portion 42 and is easily transmitted to the central portion of the mold mounting portion 42.

When the mold mounting portion 42 is pushed in the front direction by the mold clamping force in the status in which the mold closing process is completed, the central portion of the mold mounting portion 42 is pushed back in the rear direction by the mold unit 30. On the other hand, in front of the outer peripheral portion of the mold mounting portion 42, there is no element that can push back the outer peripheral portion of the mold mounting portion 42 in the rear direction.

According to the embodiment, because the bottom surfaces 48a of the inner side concave portions 48 each include the inclined portions that are inclined with respect to the mold clamping direction, the mold clamping force is not concentrated on the outer peripheral portion of the mold mounting portion 42 and is easily transmitted to the central portion of the mold mounting portion 42. Because the central portion of the mold mounting portion 42 is pushed back in the rear direction by the mold unit 30 and thus does not substantially deform, it becomes possible to reduce a deformation of the mold mounting portion 42.

The inner side concave portion 48 formed in the arm portion 43 is formed on the inner side with respect to the pin hole 43a formed in the arm portion 43. Specifically, the bottom surface 48a of the inner side concave portion 48, which is formed in the upper arm portion 43, is disposed below a line L1 that extends from the lower end of the pin hole 43a, which is formed in the upper arm portion 43, in the mold clamping direction. Further, the bottom surface 48a of the inner side concave portion 48, which is formed in the lower arm portion 43, is disposed above a line L2 that extends from the upper end of the pin hole 43a, which is formed in the lower arm portion 43, in the mold clamping direction. Because the inner side concave portions 48 don't exist in regions that are formed by extending the regions of the pin holes 43a in the mold clamping direction, bending of the arm portions 43, whose centers are located at the inner side concave portions 48, can be reduced.

The arm portions 43 include outer side surfaces that include outer side concave portions 49 formed therein, respectively. Specifically, the outer side surface (surface on the upper side) of the upper arm portion 43 and the outer side surface (surface on the lower side) of the lower arm portion 43 include outer side concave portions 49 formed therein, respectively. The outer side concave portions 49 each have depths that increase as positions move from the rear side to the front side. Because the mold clamping force is not transmitted via the outer side concave portions 49, the mold clamping force is not concentrated on the outer peripheral portion of the mold mounting portion 42 and is easily transmitted to the central portion of the mold mounting portion 42. Therefore, it becomes possible to reduce the deformation of the mold mounting portion 42.

It is noted that, in the embodiment, the arm portions 43 each include the outer side surfaces that include the outer side concave portions 49 formed therein; however, at least one arm portion 43 may include the outer side surface that includes the outer side concave portion 49 formed therein.

The reinforce portions 44 couple to the arm portions 43 such that the reinforce portions 44 limit a variation in a distance between the arm portions 43. For example, when the mold clamping force is transmitted from the arm portions 43 to mold mounting portion 42 and the reaction force from the mold unit 30 is applied to the mold mounting portion 42 such that the mold mounting portion 42 is deformed, the reinforce portions 44 can prevent such a deformation that the distance between the tip portions of the arm portions 43 increases. A rectangular frame-like portion is formed by the tip portions of the two arm portions 43, which are disposed such that they are apart from each other in the upper and lower directions, and the two reinforce portions 44, which are disposed such that they are apart from each other in the left and right directions.

The present invention is disclosed with reference to the preferred embodiments. However, the present invention is not limited to these embodiments, but various variations and modifications may be made without departing from the scope of the present invention.

For example, the injection molding machine 10 according to the embodiment is of a horizontal type in which the mold opening and closing directions correspond to a horizontal direction; however, the injection molding machine 10 may be of a vertical type in which the mold opening and closing directions correspond to a vertical direction. In the case of the vertical type, a support and a movable platen are coupled by a plurality of tie bars and a stationary platen is disposed between the support and the movable platen. A toggle mechanism is disposed between a support, which can move in the upper and lower directions with respect to a stationary platen, and a stationary platen. The stationary platen is formed by a mold mounting portion and arm portions, and the arm portions transmit a mold clamping force generated by the toggle mechanism, etc., to the mold mounting portion.

## Claims

1. An injection molding machine (10), comprising:
a movable platen (13) to which a movable mold (33) is attached; and
a mold clamping force generating mechanism (29) that is adapted to generate a mold clamping force, wherein
the movable platen includes a mold mounting portion (42) being plate-shaped to which the movable mold is attached, tie bar inserting portions (45) including tie bar through-holes for inserting tie bars (16) therethrough and provided at four corners of the mold mounting portion (42), and an upper and a lower arm portion (43) that are adapted to transmit the mold clamping force from the mold clamping force generating mechanism to the mold mounting portion,
at least one of the arm portions (43) includes an inner side surface that includes a concave portion (48) formed therein, wherein the inner side corresponds to a near side that is closer to a center line of the mold mounting portion of the movable platen, and
a bottom surface (48a) of the concave portion includes a portion that is inclined with respect to a mold clamping direction,
wherein a front end surface of the mold mounting portion (42) defines a mold mounting surface to which the movable mold is attached, and
wherein the tie bar inserting portions (45) form front concave portions (46) that are recessed from the mold mounting surface of the mold mounting portion (42), and bottom surfaces of the front concave portions are formed by front end surfaces of the tie bar inserting portions (45).

2. The injection molding machine of claim 1, wherein the platen includes a reinforce portion (44) that couples the arm portions.

## Patentansprüche

1. Spritzgießmaschine (10), umfassend:
eine bewegliche Platte (13), an der eine bewegliche Form (33) befestigt ist; und
einen Mechanismus zum Erzeugen einer Formklemmkraft (29), der angepasst ist, um eine Formklemmkraft zu erzeugen, wobei
die bewegliche Platte einen Formmontageabschnitt (42), der plattenförmig ist, an dem die bewegliche Form befestigt ist, Zugstangen-Einführungsabschnitte (45), die Zugstangen-Durchgangslöcher zum Einführen von Zugstangen (16) dort hindurch beinhalten, und an vier Ecken des Formmontageabschnitts (42) bereitgestellt sind, und einen oberen und unteren Armabschnitt (43) beinhaltet, die angepasst sind, um die Formklemmkraft von dem Mechanismus zum Erzeugen einer Formklemmkraft auf den Formmontageabschnitt zu übertragen,
mindestens einer der Armabschnitte (43) eine Innenoberfläche beinhaltet, die einen konkaven Abschnitt (48) beinhaltet, der darin gebildet ist, wobei die Innenseite einer nahen Seite entspricht, die näher an einer Mittellinie des Formmontageabschnitts der beweglichen Platte liegt, und
eine untere Oberfläche (48a) des konkaven Abschnitts einen Abschnitt beinhaltet, der in Bezug auf eine Formklemmrichtung geneigt ist,
wobei die vordere Abschlussoberfläche des Formmontageabschnitts (42) eine Formmontageoberfläche definiert, an der die bewegliche Form befestigt ist, und
wobei die Zugstangen-Einführungsabschnitte (45) vordere konkave Abschnitte (46) bilden, die von der Formmontageoberfläche des Formmontageabschnitts (42) zurückgesetzt sind, und untere Oberflächen der vorderen konkaven Abschnitte durch vordere Abschlussoberflächen der Zugstangen-Einführungsabschnitte (45) gebildet werden.

2. Spritzgießmaschine nach Anspruch 1, wobei die Platte einen Verstärkungsabschnitt (44) beinhaltet, der die Armabschnitte koppelt.

## Revendications

1. Machine de moulage par injection (10), comprenant :
un plateau mobile (13) auquel un moule mobile (33) est fixé ; et
un mécanisme de génération de force de serrage de moule (29) qui est conçu pour générer une force de serrage de moule, dans laquelle
le plateau mobile inclut une partie de montage de moule (42) étant en forme de plaque à laquelle le moule mobile est fixé, des parties d'insertion de barre de liaison (45) incluant des trous traversants de barre de liaison pour l'insertion de barres de liaison (16) à travers ceux-ci et fournis au niveau de quatre coins de la partie de montage de moule (42), et une partie de bras supérieure et une inférieure (43) qui sont conçues pour transmettre la force de serrage de moule à partir du mécanisme de génération de force de serrage de moule vers la partie de montage de moule,
au moins une des parties de bras (43) inclut une surface de côté interne qui inclut une partie concave (48) formée en son sein, dans laquelle le côté interne correspond à un côté proche qui est plus près d'une ligne centrale de la partie de montage de moule du plateau mobile, et
une surface inférieure (48a) de la partie concave inclut une partie qui est inclinée par rapport à une direction de serrage de moule,
dans laquelle une surface d'extrémité avant de la partie de montage de moule (42) définit une surface de montage de moule à laquelle le moule mobile est fixé, et
dans laquelle les parties d'insertion de barre de liaison (45) forment des parties concaves avant (46) qui sont en retrait par rapport à la surface de montage de moule de la partie de montage de moule (42), et les surfaces inférieures des parties concaves avant sont formées par les surfaces d'extrémité avant des parties d'insertion de barre de liaison (45).

2. Machine de moulage par injection selon la revendication 1, dans laquelle le plateau inclut une partie de renforcement (44) qui couple les parties de bras.
